(19) Europäisches Patentamt
European Patent Office
Office européen des brevets

(11) **EP 3 662 731 B1**

(12) **EUROPÄISCHE PATENTSCHRIFT**

(45) Veröffentlichungstag und Bekanntmachung des Hinweises auf die Patenterteilung:
**10.11.2021 Patentblatt 2021/45**

(51) Int Cl.:
***A01C 7/08*** *(2006.01)*    *A01C 7/10* *(2006.01)*

(21) Anmeldenummer: **19212544.1**

(22) Anmeldetag: **29.11.2019**

(54) **MASCHINE ZUR AUSBRINGUNG VON KÖRNIGEN FESTSTOFFEN MIT EINEM PNEUMATISCHEN FÖRDERSYSTEM**

MACHINE FOR SPREADING GRANULAR SOLIDS WITH A PNEUMATIC CONVEYING SYSTEM

MACHINE POUR L'ÉPANDAGE DE SOLIDES GRANULAIRES AVEC UN SYSTÈME DE TRANSPORT PNEUMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2018 DE 102018130637**

(43) Veröffentlichungstag der Anmeldung:
**10.06.2020 Patentblatt 2020/24**

(73) Patentinhaber: **Lemken GmbH & Co KG**
**46519 Alpen (DE)**

(72) Erfinder:
• **Gotzen, Christian**
**41751 Viersen (DE)**
• **Bergerfurth, Dennis**
**46459 Rees (DE)**

(56) Entgegenhaltungen:
**EP-A1- 0 328 858**    **EP-A1- 2 269 434**
**EP-A1- 2 959 762**    **DD-A1- 157 290**
**DE-T2- 69 927 309**   **DE-U1- 8 617 580**
**US-A1- 2017 118 906**

**Beschreibung**

Die vorliegende Erfindung bezieht sich auf eine landwirtschaftliche Maschine zur Ausbringung von körnigen Feststoffen mit einem pneumatischen Fördersystem zur Beförderung der körnigen Feststoffe aus einem Vorratstank zu einer Anzahl von Abgabeeinheiten, wobei das Fördersystem ein Gebläse, eine Verbindungsleitung vom Tank zu einer Verteilvorrichtung, die eine Verteilkammer mit einer darin ausgebildeten Anzahl von Auslauföffnungen aufweist, und eine Anzahl von Leitungen, die jeweils an eine zugehörige Auslauföffnung angeschlossen sind und die mit dem Luftstrom beförderte Feststoffe jeweils zu einer der Leitung zugeordneten Ausgabeeinheit leiten.

Eine Maschine mit einer Verteilvorrichtung, ist aus der Schrift DE 195 42 057 A1 bekannt. Es hat sich herausgestellt, dass die Feststoffe trotz der gleichmäßigen Anordnung der Auslauföffnungen mit identischen Größenanteilen jeder Auslauföffnung an der Außenwandung der Verteilkammer nicht gleichmäßig auf die Auslauföffnungen verteilt werden.

Aus der Schrift DD 157290 ist eine gattungsgemäße Maschine bekannt, bei der in einem Gehäuse eine Verteilkammer angeordnet ist, von der aus die körnigen Feststoffe in angeschlossene Teilleitungen verteilt werden. Mehrere Teilleitungen münden jeweils in einem stromabwärts angeordneten gemeinsamen Mehrfachmündungsstück. Von dort aus werden die körnigen Feststoffe den zugeordneten Drillscharen in jeweils einer an das Mehrfachmündungsstück angeschlossenen Abgangsleitung zugeleitet. Der für ein Drillschar vorgesehene Zustrom an Feststoffen wird also zunächst in mehrere Teilgutströme aus der Verteilkammer aufgeteilt, um diese Teilgutströme stromabwärts der Verteilkammer wieder in einem Mehrfachmündungsstück zusammenzuführen. In der Verteilkammer befinden sich unterschiedlich große Kreissektoren, die sich durch einen unterschiedlich ausfallenden Kreisbogenanteil voneinander unterscheiden. Es wird nicht näher erläutert, warum welche Teilleitungen einem bestimmten Kreissektor zugeordnet werden könnten. Nicht benötigte Teilleitungen werden geschlossen. Die Zahl der angeschlossenen Teilleitungen kann je nach Anwendungsfall variiert werden, dabei bleibt es aber dem Zufall überlassen, welche Kreissektoren den Teilleitungen und welche von diesen einem Mehrfachmündungsstück zugeordnet werden.

Aus der Schrift EP 1 135 980 A1 ist es bekannt, in einer Sämaschine Messsysteme zu installieren, mit denen die Ablagerate für die Ablage von Saatgut in den Boden gesteuert wird. Die Messsysteme arbeiten mit Luftdruck. Wenn der Luftdruck in den Messsystemen nicht gleich ist, kommt es zu Unterschieden in der Saatgutablage. Um den Luftdruck in den Messsystemen zu vergleichmäßigen, wird vorgeschlagen, Reduzierelemente in den pneumatischen Leitungen vorzusehen, über die die Druckverhältnisse in den pneumatischen Leitungen aneinander angeglichen werden. Weitere landwirtschaftliche Sämaschinen sind offenbart in EP 2 959 762 A1, US 2017/118906 A1 und DE 86 17 580 U1.

Es ist die Aufgabe der vorliegenden Erfindung, die Verteilung der Feststoffe auf die Auslauföffnungen zu verbessern.

Die Aufgabe wird für eine gattungsgemäße Maschine gelöst, indem an den Auslauföffnungen, den Leitungen und/oder den Ausgabeeinheiten Drosselelemente angeordnet sind, durch die der Staudruck in der betreffenden Leitung erhöht ist.

Es hat sich herausgestellt, dass die an die Auslauföffnungen angeschlossenen Leitungen ohne die zusätzlichen Drosselelemente unterschiedliche Staudrücke aufweisen. Die unterschiedlichen Staudrücke ergeben sich aus unterschiedlichen Längen der an die jeweiligen Auslauföffnungen angeschlossenen Leitungen, unterschiedliche Biegeradien, in denen die Leitungen geführt sind, und anderen Einflussfaktoren auf den Staudruck in einer Leitung. Wenn der in die Verteilkammer strömende Luftstrom auf unterschiedliche Staudrücke in den Auslauföffnungen stößt, neigt der Luftstrom bei gleich großen Auslauföffnungen dazu, bevorzugt in diejenigen Auslauföffnungen zu strömen, die einen geringeren Staudruck aufweisen. Dadurch strömt in die Auslauföffnungen mit einem höheren Staudruck eine geringere Menge des Luftstroms ein, und diese Auslauföffnungen werden dadurch auch nur mit einer geringeren Menge von im Luftstrom beförderten Feststoffen beschickt als die Auslauföffnungen mit einem geringeren Staudruck. Trotz der gleich großen Öffnungen der Auslauföffnungen ergeben sich also unterschiedliche Durchsatzmengen an Feststoffen.

Der Staudruck kann in den jeweiligen Leitungen über Drosselelemente gezielt verändert werden, so dass sich die Staudrücke in den einzelnen Leitungen auf einem Niveau bewegen, bei dem sich in der Verteilerkammer annähernd gleiche Verteilmengen in den jeweiligen Auslauföffnungen ergeben. Die Drosselelemente werden in den Bauteilen für die Leitungen eingesetzt, in denen ein geringerer Staudruck als in anderen Leitungen herrscht. Die Drosselelemente können insbesondere eingesetzt werden, um eine Feinjustierung der Verteilmengen durch eine Veränderung des Staudrucks in den jeweiligen Leitungen vorzunehmen, insbesondere, indem in den Leitungen mit einem geringeren Staudruck dieser erhöht wird.

Nach einem nicht-erfindungsgemäßen Beispiel ist als Drosselelement eine verstellbare Schlauchschelle verwendet. Eine Schlauchschelle kann bei flexiblen Schlauchmaterialien einfach enger gestellt werden, um mit dem Zusammendrücken der Leitung auch den Querschnitt der Leitung in einem gewünschten Maß zu verringern und dadurch den Staudruck zu erhöhen. Bei Bedarf kann die Schlauchschelle auch wieder weiter gestellt werden, um den Staudruck wieder zu verringern.

Gemäß der Erfindung ist als Drosselelement ein Reduzierstück verwendet. Ein Reduzierstück ist insbesondere vorteilhaft, wenn das Material der Leitungen eine eher geringe Elastizität aufweist. Das Reduzierstück wird in den freien Querschnitt einer Leitung geschoben um dadurch den Staudruck zu erhöhen. Das Reduzierstück kann wieder entnommen werden, wenn der Staudruck wieder abgesenkt werden soll. Es können Reduzierstücke in verschiedenen Größen verwendet werden, oder es werden Reduzierstücke verwendet, deren Größe variabel einstellbar ist.

Nach einer Ausgestaltung der Erfindung ist als Drosselelement eine Lochblende verwendet. Mit der Lochblende kann der Strömungsquerschnitt durch eine Leitung ebenfalls auf einfache und kostengünstige Art verändert werden. Mit der Lochblende wird die Lochweite auf ein Maß eingestellt, bei dem sich ein gewünschter Staudruck einstellt. Die Lochblende kann insbesondere in einem Verbindungsbereich von Bauteilen zwischen die Bauteile gesetzt werden.

Nach einer Ausgestaltung der Erfindung ist der Staudruck aller Leitungen der landwirtschaftlichen Maschine mittels der Drosselelemente zumindest annähernd gleich eingestellt. Die Einstellung aller Leitungen der landwirtschaftlichen Maschine auf einen zumindest annähernd gleichen Staudruck in allen Leitungen ist einem hydraulischen Abgleich in einem Heizungssystem vergleichbar. Bei angepassten Staudrücken strömen zumindest annähernd gleiche Mengen körniger Feststoffe in die Auslauföffnungen ein, wenn die freien Querschnitte der Auslauföffnungen bzw. der sich daran anschließenden Leitungen zumindest annähernd gleich groß sind und auch die Größe der Sektoren, aus denen die Zuluft in die Auslauföffnungen einströmt, zumindest annähernd gleich ist.

Nach einer Ausgestaltung der Erfindung sind die Drosselelemente beweglich und/oder volumetrisch veränderlich ausgestaltet und deren räumliche Lage und/oder Volumenform ist manuell und/oder motorisch verstellbar. Die Veränderbarkeit und die Verstellbarkeit der Drosselelemente vereinfachen die Einstellung und Anpassung der Verteilvorrichtung an unterschiedliche körnige Feststoffe und wechselnde Einsatzbedingungen. Hier ist zwischen einer Vollautomatik und einer nur manuellen Verstellung je nach betriebenem Aufwand jede Zwischenstufe der Verstellung und Einstellbarkeit möglich.

Nach einer Ausgestaltung der Erfindung sind an den Auslauföffnungen, den Leitungen und/oder den Ausgabeeinheiten an eine Auswerteelektronik angeschlossene Sensoren angeordnet, mit denen die in einer einzelnen Leitung beförderte Menge von körnigen Feststoffen ermittelt wird, die Auswerteelektronik vergleicht die ermittelten Mengenwerte der einzelnen Leitungen und zeigt Mengenunterschiede an und/oder gibt Stellsignale an eine Aktorik aus, mit denen die Drosselelemente beweglich und/oder volumetrisch veränderlich sind. Durch die vorgeschlagene Sensorik wird eine vollautomatische Regelung der Drosselelemente möglich. Die Verstellung der Drosselelemente kann bei dieser Ausstattung der landwirtschaftlichen Maschine auch automatisiert erfolgen, wenn die landwirtschaftliche Maschine mit einer Sensorik ausgestattet ist, die die Verteilung der körnigen Feststoffe auf die einzelnen Auslauföffnungen misst, und eine Steuerung vorhanden ist, mit der die ermittelten Sensorwerte über eine geeignete Aktorik in Stellbewegungen der Drosselelemente umgesetzt werden.

Nach einer Ausgestaltung der Erfindung ist ein Drosselelement in einem Bereich angeordnet, in dem sich eine Leitung verzweigt. Eine solche Verzweigung kann gut zur Anbringung eines Drosselelements genutzt werden, weil dort sowieso schon Verzweigungsbauteile montiert werden müssen. In diesem Zusammenhang ist es leicht, dort zusätzliche Drosselelemente anzubringen.

Nach einer Ausgestaltung der Erfindung erfolgt die Verzweigung der Leitung über eine Y-Weiche, in die ein Drosselelement integriert ist, und die verzweigten Enden einer Leitung münden in Doppelscheibenscharen eines Doppelreihen-Säaggregats oder enden in der Nähe der Doppelscheibenscharen. Die Verteilung des Feststoffes in der zentralen Verteilerkammer kann durch die Anpassung der Staudrücke in den jeweiligen Leitungen zu den Doppelreihen-Säaggregaten auf einen annähernd gleichen Level erheblich verbessert werden. Das ist insbesondere dann vorteilhaft, wenn das Doppelreihen-Säaggregat dazu genutzt wird, um Saatgutkörner in benachbarten Reihen, insbesondere im Zickzackverbund in Gestalt einer sogenannten Deltarow abzulegen. Um das pflanzenbauliche Potential einer doppelreihigen Saatgutablage ausnutzen zu können, ist es wichtig, Feststoffe neben oder an die Saatgutkörner sicher und präzise an jedem einzelnen Doppelreihen-Säaggregat zugeführt zu bekommen, und zwar unabhängig davon, ob es sich über die Arbeitsbreite der Sämaschine gesehen mehr innen oder außen befindet.

Nach einer Ausgestaltung der Erfindung weisen Leitungen, die an Auslauföffnungen angeschlossen sind, deren zugehörige Sektorengröße größer ist als die Sektorengröße anderer Auslauföffnungen, im Anschlussbereich an die Auslauföffnung einen höheren Staudruck auf als Leitungen, die an Auslauföffnungen angeschlossen sind, deren zugehörige Sektorengröße kleiner ist als die Sektorengröße anderer Auslauföffnungen. Die unterschiedlichen Staudrücke in den Auslauföffnungen und die daraus resultierenden unterschiedlichen Durchsatzmengen mit Feststoffen können zumindest teilweise auch durch die nun unterschiedlichen Sektorengrößen der Auslauföffnungen kompensiert werden. Indem die Leitungen mit einem höheren Staudruck an Auslauföffnungen mit einer relativ größeren Sektorengröße angeschlossen sind, können diese Auslauföffnungen trotz der bei gleicher Größe geringeren Einströmmenge nun durch die größere Dimensionierung zumindest annähernd gleiche Durchsatzmengen an Feststoffen aufnehmen wie Auslauföffnungen, deren daran angeschlossene Leitungen einen geringeren Staudruck aufweisen.

Mit dem Begriff der Sektorengröße ist nicht die Querschnittsfläche der Auslauföffnung gemeint, sondern der Anteil, den ein Sektor an der Summe aller Sektoren an der Verteilfläche aufweist, über die die körnigen Feststoffe in der Verteilkammer den jeweiligen Auslauföffnungen zugeteilt werden. Die Verteilflächen einzelner Sektoren müssen nicht glattflächig ausgebildet sein, sondern können eine räumliche Gestaltung aufweisen, die die Teilung des Gutstroms der körnigen Feststoffe und des Luftstroms sinnvoll unterstützt, wie beispielsweise trichterartige Gestaltungen. Die Sektoren können voneinander durch Rippen, Stege, Ausformungen wie Erhebungen und Vertiefungen in den Leitflächen der Verteilkammer und dergleichen voneinander abgeteilt sein. Die Sektorengrößen können sich beispielsweise aus Kreisbogenanteilen ergeben, innerhalb derer körnige Feststoffe nur einer zugehörigen Auslauföffnung zugeleitet werden.

Nach einer Ausgestaltung der Erfindung weist die Verteilkammer eine kreisrunde Grundform auf. In einer kreisrunden Grundform ergeben sich gleichmäßige Strömungsverhältnisse, die die gleichmäßige Verteilung der körnigen Feststoffe verbessern.

Nach einer Ausgestaltung der Erfindung ergeben sich die jeweiligen Anteile der Auslauföffnungen an der Summe der in der Verteilkammer ausgebildeten Sektoren aus unterschiedlichen Kreisbogenanteilen von Leitflächen, die auf die jeweiligen Auslauföffnungen entfallen, und/oder aus unterschiedlich großen Querschnittsflächen der Auslauföffnungen in der Verteilkammer. Für die Erfindung macht es keinen entscheidenden Unterschied, ob die Auslauföffnungen so unterschiedlich groß gestaltet werden, dass sich pro Einheit einer Querschnittsfläche unterschiedliche Einströmmengen der körnigen Feststoffe an den Auslauföffnungen ergeben und die Mengendifferenzierung somit nur über die Größe der Auslauföffnungen gesteuert wird, oder ob die Auslauföffnungen genau oder zumindest annähernd gleich groß gestaltet sind und die Größe der einer jeweiligen Auslauföffnung zugeordneten Leitfläche unterschiedlich gestaltet ist, oder ob eine Kombination dieser Möglichkeiten gewählt wird, um eine zumindest annähernd gleiche oder genau gleiche Einströmmenge in eine Auslauföffnung trotz unterschiedlicher Staudrücke in den an die Auslauföffnungen angeschlossenen Leitungen zu erreichen. Wesentlich ist, dass die in der Verteilkammer einer Auslauföffnung zuströmende Menge an körnigen Feststoffen trotz unterschiedlicher Staudrücke in den an die Auslauföffnungen angeschlossenen Leitungen durch eine Größenvariation der Auslauföffnungen und/oder der Sektorenanteile an den Leitflächen so differenziert ist, dass sich gleichwohl eine gleiche oder zumindest annähernd gleiche Verteilmenge für jede Auslauföffnung ergibt.

Nach einer Ausgestaltung der Erfindung weist die Verbindungsleitung im Mündungsbereich in die Verteilkammer eine zumindest annähernd vertikale Ausrichtung auf, so dass sie die körnigen Feststoffe aus einer zumindest annähernd vertikalen Richtung in die Verteilkammer einleitet, die Verbindungsleitung mündet zumindest annähernd mittig in der Verteilkammer ein, so dass die körnigen Feststoffe mittig in die Verteilkammer eingefördert werden, und in der Verteilkammer sind Leitflächen ausgebildet, mit denen die Feststoffe aus der zumindest annähernd vertikalen Richtung in eine zumindest annähernd horizontale und radiale Richtung auf die Auslauföffnungen zu umgeleitet werden. Durch die mittige Einströmung der körnigen Feststoffe in die Verteilkammer aus einer vertikalen Richtung und die Verteilung der körnigen Feststoffe in eine waagerechte radiale Richtung nach außen wirken die Gravitationskräfte auf die körnigen Feststoffe gleichmäßig und unabhängig davon ein, auf welche Auslauföffnung zu die körnigen Feststoffe vom Luftstrom befördert werden. Ein Verteilungsfehlereffekt, der aus unterschiedlich auf verschiedene Teile des Gutstroms einwirkenden Gravitationskräften herrühren könnte, wird dadurch eliminiert.

Nach einer Ausgestaltung der Erfindung weist die Verteilkammer zwischen 3 und 48 Auslauföffnungen auf. Je nachdem, wie viele Auslauföffnungen die Verteilkammer aufweist, können die Unterschiede zwischen den einzelnen Auslauföffnungen zugehörigen Sektorgrößen unterschiedlich stark differenziert werden. Einen Einfluss darauf, wie stark die jeweiligen Sektorgrößen voneinander differenziert sind, hat auch die Arbeitsbreite der landwirtschaftlichen Maschine. Bei einer Arbeitsbreite von beispielsweise 3 m ergeben sich geringere Unterschiede im Staudruck aus der Länge der jeweiligen Leitung zu einer mittleren und einer äußeren Säschar als bei einer Arbeitsbreite von beispielsweise 12 m. In einem Fall beträgt der Leitungslängenunterschied ca. 1,5 m, im anderen Fall ca. 6 m. Je größer der Leitungslängenunterschied in einer landwirtschaftlichen Maschine ausfällt, umso mehr Zwischenstufen der Sektorengrößen können zwischen der größten und kleinsten Sektorengröße ausgebildet werden, um über die Breite der landwirtschaftlichen Maschine eine annähernd oder genau gleiche Verteilung in der Verteilkammer trotz unterschiedlicher Staudrücke zu erzielen.

Nach einer Ausgestaltung der Erfindung ist die Verteilkammer über die Bauhöhe der Auslauföffnungen durch zwei ringförmige Formkörper umfangseitig begrenzt, die durch eine zumindest annähernd horizontal verlaufende Trennlinie voneinander getrennt sind, und beide Formkörper weisen zueinander passende Ausformungen auf, die paarweise jeweils eine Auslauföffnung ausbilden. Die zwei ringförmigen Formkörper sind als Gussteile aus einem metallischen, keramischen Werkstoff oder einem Kunststoff leicht herstellbar und montierbar. Die Verteilkammer ist im Wartungs- oder Reparaturfall auch leicht von oben zugänglich, wenn nur der obere ringförmige Formkörper demontiert wird. Die Leitflächen, über die körnigen Feststoffe den jeweiligen Auslauföffnungen zugleitet werden, können in die Werkzeuge für die Formkörper leicht einmodelliert werden.

Nach einer Ausgestaltung der Erfindung sind die Auslauföffnungen auf der nach außen weisenden Seite der Außenwandung durch eine identifizierende Markierung gekennzeichnet. Wartungs- und Reparaturarbeiten werden erleichtert, wenn sofort anhand der Markierung erkennbar ist, welche Sektorengröße eine jeweilige Auslauföffnung aufweist. Die Markierung kann dauerhaft ausgestaltet sein, beispielsweise, indem sie als eine Vertiefung und/oder Erhebung in der nach außen weisenden Oberfläche des Gehäuses der Auslauföffnung ausgebildet ist.

Nach einer Ausgestaltung der Erfindung sind zwischen benachbarten Auslauföffnungen bewegliche Trennstege angeordnet, deren räumliche Lage manuell und/oder motorisch verstellbar ist. Durch bewegliche Trennstege ist eine nachträgliche Feinjustierung der Sektorengrößen möglich. Die landwirtschaftliche Maschine kann über die Trennstege an ein unterschiedliches Förderverhalten von unterschiedlichen körnigen Feststoffen und/oder an einen Verschleiß oder einen Materialaufbau innerhalb der Verteilkammer angepasst werden. Es ist vorstellbar, für bestimmte körnige Feststoffe bestimmte Stellpositionen der Trennstege zu empfehlen, um die landwirtschaftliche Maschine optimal auf die jeweiligen Feststoffe einzustellen.

Nach einer Ausgestaltung der Erfindung sind an den Auslauföffnungen, den Leitungen und/oder den Ausgabeeinheiten an eine Auswerteelektronik angeschlossene Sensoren angeordnet, mit denen die in einer einzelnen Leitung beförderte Menge von körnigen Feststoffen ermittelt wird, die Auswerteelektronik zeigt die ermittelten Mengenwerte der einzelnen Leitungen und Mengenunterschiede an und/oder vergleicht diese und/oder gibt Stellsignale an eine Aktorik aus, mit denen die Trennstege verstellbar sind. Die Verstellung der Trennstege kann bei dieser Ausstattung der landwirtschaftlichen Maschine auch automatisiert erfolgen, wenn die landwirtschaftliche Maschine mit einer Sensorik ausgestattet ist, die die Verteilung der körnigen Feststoffe auf die einzelnen Auslauföffnungen misst, und eine Steuerung vorhanden ist, mit der die ermittelten Sensorwerte über eine geeignete Aktorik in Stellbewegungen der Trennstege umgesetzt werden. Zwischen der Vollautomatik und einer manuellen Verstellung sind auch Lösungen möglich, die nur fernbedienbar oder an der landwirtschaftlichen Maschine selbst motorisch verstellbar sind.

Weitere Merkmale der Erfindung ergeben sich aus den Ansprüchen, den Figuren und der gegenständlichen Beschreibung.

Die Erfindung wird nun anhand eines bevorzugten Ausführungsbeispiels sowie unter Bezugnahme auf die beigefügten Zeichnungen näher erläutert.

Es zeigen:

Fig. 1:     eine skizzenhafte Darstellung einer landwirtschaftlichen Maschine,

Fig. 2:     eine Ansicht von schräg oben auf eine Verteilvorrichtung,

Fig. 3:     eine Schnittansicht von oben auf eine Verteilkammer entlang der in Fig. 2 gezeigten Linie A-A,

Fig. 4:     eine Y-Weiche einer Leitung, in die ein Drosselelement eingesetzt ist, und

Fig. 5:     eine Ansicht auf eine Sämaschine, die in ihren Leitungen Drosselelemente aufweist.

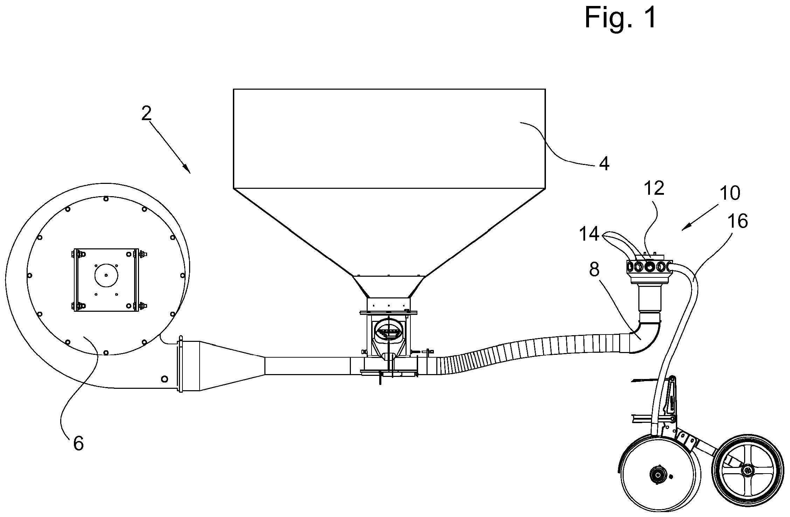

In Fig. 1 ist eine skizzenhafte Darstellung einer landwirtschaftlichen Maschine 2 gezeigt, wobei die landwirtschaftliche Maschine eine Sämaschine ist. In einem Vorratstank 4 befindet sich Saatgut als ein Beispiel für körnige Feststoffe, die aus dem Vorratstank 4 zu einer Anzahl von Abgabeeinheiten pneumatisch befördert werden. Die körnigen Feststoffe werden mit dem Luftstrom befördert, den das Gebläse 6 erzeugt. Der Luftstrom befördert die körnigen Feststoffe über die Verbindungsleitung 8 zur Verteilvorrichtung 10. In der Verteilvorrichtung 10 befindet sich eine Verteilkammer 12, in der die körnigen Feststoffe auf eine Anzahl von Auslauföffnungen 14 verteilt werden. An die Auslauföffnungen 14 sind jeweils Leitungen 16 angeschlossen, über die die körnigen Feststoffe zu den Abgabeeinheiten befördert werden. Bei den Abgabeeinheiten kann es sich beispielsweise um ein Säschar handeln. Die körnigen Feststoffe werden vom Luftstrom mit Strömungsgeschwindigkeiten von bis zu 30 m/s bewegt.

Die Verteilvorrichtung 10 ist im Ausführungsbeispiel annähernd waagerecht zur in vertikaler Richtung aufragenden Verbindungsleitung 8 ausgerichtet. Aus der Verbindungsleitung 8 werden die körnigen Feststoffe in einer Bewegungsbahn um etwa 90° umgelenkt, um dann aus den Auslauföffnungen 14 in die Leitungen 16 einzutreten. Bei der Umlenkung der körnigen Feststoffe in der Verteilkammer 12 werden diese den jeweiligen Auslauföffnungen 14 zugeordnet, durch die sie die Verteilkammer 12 verlassen.

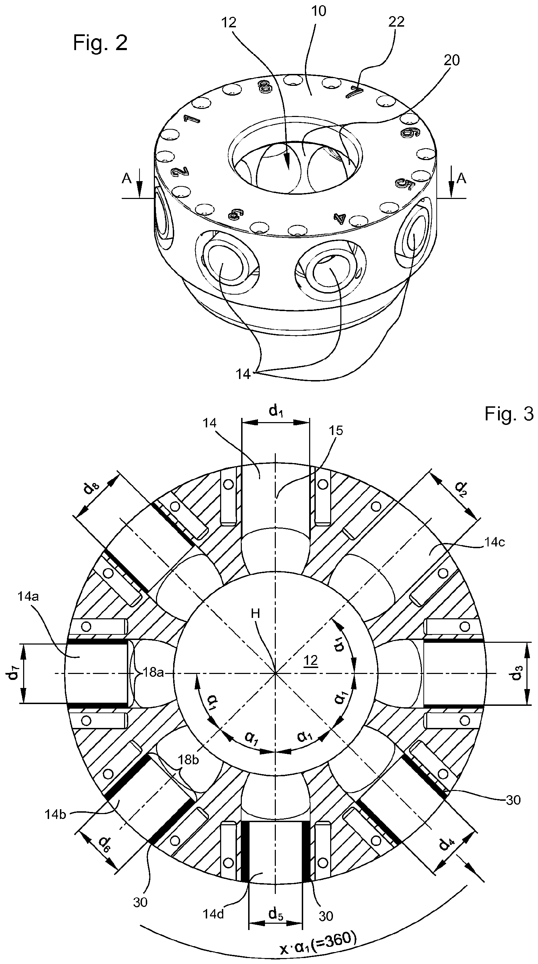

In Fig. 2 ist eine Ansicht von schräg oben auf eine Verteilvorrichtung 10 ohne einen oberen Deckel gezeigt. In dieser Ansicht ist die Verteilerkammer 12 im Inneren der Verteilvorrichtung 10 gut erkennbar, von der aus die körnigen Feststoffe in die Auslauföffnungen 14 eintreten. Die Verteilvorrichtung 10 weist eine Ringform auf. Die Auslassöffnungen 14 sind so gestaltet, dass die Leitungen 16 außen daran angeschlossen werden können. Jeder Auslauföffnung 14 ist ein Sektor zugeordnet, aus dem die dort befindlichen körnigen Feststoffe in die zugehörige Auslauföffnung 14 einlaufen. Die Verteilkammer 12 verfügt über Oberflächen, über die die körnigen Feststoffe den Auslassöffnungen 14 zugeleitet werden. Diese Oberflächen bilden Leitflächen 20.

In Fig. 3 ist eine Schnittansicht von oben auf die Verteilvorrichtung 10 entlang der Linie A-A in Fig. 2 gezeigt. Die Längsmittelachsen 15 der Auslauföffnungen 14 sind in einem gleichen Winkel $\alpha_1$ zueinander um die Hochmittelachse H der Verteilerkammer 12 herum angeordnet. Im gezeigten Ausführungsbeispiel weisen die Längsmittelachsen 15 jeweils einen konstanten Winkelabstand von $\alpha_1=45°$ auf. Bei mehr oder weniger Auslauföffnungen 14 kann das Maß des Winkels $\alpha_1$ entsprechend angepasst werden, um eine gleichmäßige Anordnung der Längsmittelachsen 15 der Auslauföffnungen 14 zu erreichen. In Fig. 3 ist erkennbar, dass zu jeder Auslauföffnung 14 ein Sektor 18 gehört, aus dem heraus die körnigen Feststoffe aus der Verteilkammer 12 in die zugehörige Auslauföffnung 14 einlaufen. So werden beispielsweise die aus der Verteilkammer 12 in den Sektor 18a einlaufenden Feststoffe in die Auslauföffnung 14a befördert und die körnigen Feststoffe, die aus der Verteilkammer 12 in den Sektor 18b einlaufen, werden durch die Auslauföffnung 14b weiterbefördert.

Da die Verteilerkammer 12 in ihrer Grundform so gestaltet ist, dass auf die jeweiligen Sektoren 18 jeweils ein gleich großer Anteil der Gesamt-Querschnittsfläche aller Sektoren 18 entfällt, auf die die körnigen Feststoffe in der Verteilkammer 12 verteilt werden, ergeben sich aus der Grundform der Verteilerkammer 12 zunächst für die den jeweiligen Sektoren 18 zugeordneten Auslassöffnungen 14 keine räumlichen oder maßlichen Differenzierungen in der Verteilung der körnigen Feststoffe. Die Form des die Verteilerkammer 12 bildenden Werkstückes sieht eben gleich große Öffnungsquerschnitte für die jeweiligen Auslassöffnungen vor.

Um nun aber gleichwohl die Verteilung der körnigen Feststoffe in der Verteilerkammer 12 in einer gewünschten Weise zu beeinflussen, sind in der Ausführung gemäß Fig. 3 die freien Querschnitte der Auslassöffnungen 14, wie sie sich in der Grundform der Verteilerkammer 14 darstellen, durch ein nachträglich in die jeweilige Auslassöffnung 14 eingesetztes jeweiliges Drosselelement 30 verkleinert worden. Bei den Drosselelementen 30 im gezeigten Ausführungsbeispiel handelt es sich um ringförmig ausgebildete Reduzierstücke.

Durch die in Fig. 3 erkennbaren unterschiedlichen Wandstärken der jeweils eingesetzten Reduzierstücke verändert sich auch der nach dem Einsetzen der Reduzierstücke verbliebene freie Durchmesser der jeweiligen Auslassöffnungen 14. So ist der Durchmesser $d_2$ in der Auslassöffnung 14c am größten, weil in die Auslassöffnung 14c kein Reduzierstück eingesetzt worden ist. Der Durchmesser $d_5$ in der Auslassöffnung 14d ist am kleinsten, weil das in die Auslassöffnung 14d eingesetzte Reduzierstück die dicksten Wandstärken aufweist. Die Durchmesser $d_1$, $d_3$, $d_4$, $d_6$, $d_7$ und ds der übrigen sechs Auslassöffnungen 14 liegen zwischen diesen Extremwerten. Im Ausführungsbeispiel ergibt sich hinsichtlich der Durchmesser $d_1$ - $d_8$ der freien Querschnitte der Auslassöffnungen 14 beispielsweise die folgende Stufung:

$$d_2 > d_1 > d_3 > d_8 > d_4 > d_7 > d_6 > d_5$$

Im Ausführungsbeispiel unterscheiden sich die Drosselwirkungen jedes einzelnen Drosselelements 30 von einem anderen Drosselelement 30 wegen der unterschiedlichen Wandstärken. Abweichend vom Ausführungsbeispiel können aber auch Drosselelemente 30 verwendet werden, die sich in ihrer Drosselwirkung nicht sämtlich voneinander unterscheiden. So kann es auch schon genügen, die Verteilwirkung in der Verteilerkammer 12 zu verbessern, indem nur in einen Teil der Auslassöffnungen 14 ein einziger Typ eines Drosselelements 30 mit einer einheitlichen Wandstärke eingesetzt wird. Die Verteilwirkung wird dann so beeinflusst, dass der Durchmesser in den Auslassöffnungen reduziert ist, in die ein Drosselelement 30 eingesetzt worden ist, und der Durchmesser der Auslassöffnungen 14, in die kein Drosselelement 30 eingesetzt worden ist, im Ausgangszustand verbleibt. Es kann beispielsweise auch eine verbesserte Verteilwirkung in der Verteilerkammer 12 erzielt werden, indem in nur eine einzige Auslassöffnung 14 ein Drosselelement 30 eingesetzt wird. Es können auch Gruppen von Drosselelementen 30 verwendet werden, beispielsweise von zwei oder drei Gruppen mit einer jeweiligen Wandstärke eines Reduzierstücks, die schon eine feinere Stufung der Drosselung des Durchmessers von Auslassöffnungen 14 ermöglichen.

Wenn nun in den Leitungen, die an die Auslauföffnungen 14 angeschlossen sind, vordem Einbau von Drosselelementen 30 unterschiedliche Staudrücke herrschen, würde in die Auslauföffnungen 14 mit dem höheren Staudruck trotz gleich großer Sektoren 18 aus der Verteilerkammer 12 entsprechend weniger Luft und damit auch von dieser beförderte körnige Feststoffe in diese Auslauföffnungen einlaufen. Wenn erfindungsgemäß in die Auslauföffnungen 14 mit dem geringeren Staudruck die Drosselelemente 30 eingesetzt werden, erhöht sich dadurch der Staudruck in diesen Auslauföffnungen 14, und die Staudruckdifferenzen zwischen den einzelnen Auslauföffnungen 14 verringern sich. Im Ergebnis ergeben sich aus dem Einbau von Drosselelementen 30 in einzelne oder mehrere Auslauföffnungen 14 über alle Auslauföffnungen 14 gesehen nahezu gleiche Förderanteile der körnigen Feststoffe.

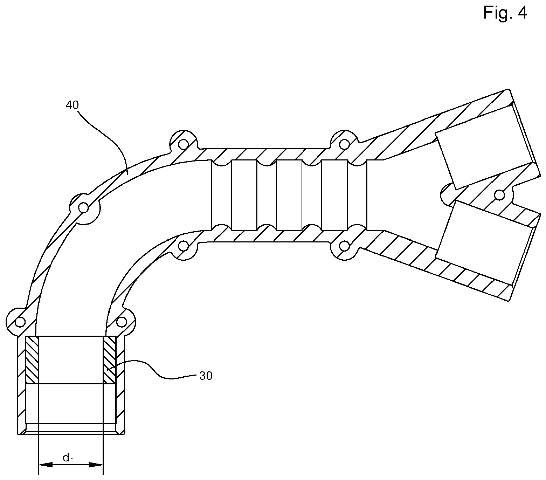

In Fig. 4 ist eine Y-Weiche 40 gezeigt, die im Verlauf einer Leitung 16 zu ihrer Verzweigung verwendet sein kann. In den Eingang der Y-Weiche 40 ist ein Drosselelement 30 eingesetzt, durch das der freie Querschnitt der Rohrleitung auf das Maß $d_r$ reduziert ist. Durch den reduzierten freien Querschnitt der Rohrleitung ergibt sich ein höherer Strömungswiderstand für die hindurchströmende Luft, woraus ein höherer Staudruck in der Leitung 16 stromaufwärts der Y-Weiche 40 resultiert. Auch hier können Drosselelemente 30 mit einer unterschiedlich ausgeprägten Drosselwirkung verwendet werden. Bei dem in Fig. 4 gezeigten Drosselelement 30 handelt es sich wieder um ein ringförmig gestaltetes Reduzierstück, bei dem die Drosselwirkung durch eine entsprechend dicke Wandstärke herbeigeführt wird. Die Wandstärke kann bei unterschiedlichen, in die Y-Weiche 40 passenden Reduzierstücken variieren, um den Staudruck in einer Leitung 16 auf einen gewünschten Wert einstellen zu können. Das Reduzierstück ist wahlweise in eine Leitung 16 sowie deren Bauteile - wie beispielsweise die gezeigte Y-Weiche 40 - ein- und ausbaubar. Anstelle des dargestellten ringförmigen Reduzierstückes können auch andere Bauformen eines Drosselelements 30 verwendet werden. In eine Leitung 16 können auch Leitungsabschnitte einbaubar sein, deren Leitungsquerschnitt herstellungsbedingt, beispielsweise als vorgeformtes Spritzgussteil, so bemessen ist, dass sich die gewünschte Drosselwirkung einstellt. Durch Vorhalten mehrerer entsprechend gestalteter Leitungsabschnitte mit einer unterschiedlichen Drosselwirkung und die Auswahl der entsprechenden Leitungsabschnitte zur Erzielung einer gewünschten Drosselwirkung in einer bestimmten Leitung kann ebenfalls die Verteilung der körnigen Feststoffe in der Verteilkammer 12 auf erfindungsgemäße Weise verbessert werden.

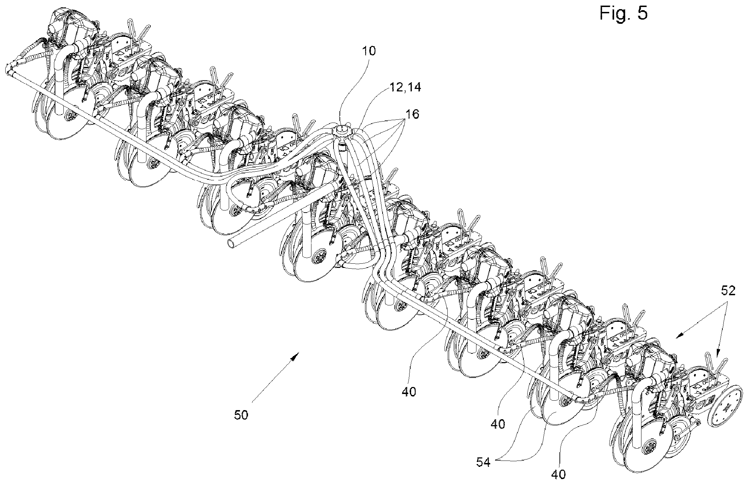

In Fig. 5 ist eine Sämaschine 50 mit einer Verteilvorrichtung 10 gezeigt, an deren Auslauföffnungen 14 acht Leitungen 16 angeschlossen sind. Jede von der Verteilvorrichtung 10 abgehende Leitung 16 mündet in ihrem Verlauf ein einer Y-Weiche 40, an der sich die Leitungen 16 auf zwei Leitungsstränge verzweigen. Die Verzweigung in zwei Leitungsstränge wird beispielsweise benötigt, um die Doppelscheibenschare 54 eines Doppelreihen-Säaggregats 52 bei der Aussaat kontinuierlich mit Feststoffen ergänzend zum Saatgut zu versorgen. Mit den Doppelreihen-Säaggregaten 52 ist es beispielsweise möglich, Einzelkörner in einem pflanzenbaulich vorteilhaften Doppelreihen, insbesondere Zickzack-Verband abzulegen. Dabei sind die Abstände der Doppelreihen-Säaggregate 52 zueinander wesentlich größer als die Abstände der zugehörigen Doppelscheibenschare 54 innerhalb der Doppelreihe, also im Verhältnis 3:1 oder größer. Die Dosierung und Ablage der Einzelkörner wird durch die verbesserte Verteilung in der Verteilkammer 12 ebenfalls präziser und sicherer.

Die Erfindung ist vorstehend anhand einer Sämaschine als Ausführungsbeispiel erläutert worden. Die landwirtschaftliche Maschine kann allerdings auch beispielsweise ein Düngerstreuer sein, mit dem ein Dünger oder anderes Granulat in angeschlossenen Düngescharen ausgebracht wird, oder es handelt sich um eine kombinierte Sä- und Düngemaschine.

**Patentansprüche**

1. Landwirtschaftliche Maschine (2) zur Ausbringung von körnigen Feststoffen mit einem pneumatischen Fördersystem zur Beförderung der körnigen Feststoffe aus einem Vorratstank (4) zu einer Anzahl von Abgabeeinheiten, wobei das Fördersystem ein Gebläse (6), eine Verbindungsleitung (8) vom Tank (4) zu einer Verteilvorrichtung (10), die eine Verteilkammer (12) mit einer darin ausgebildeten Anzahl von Auslauföffnungen (14) aufweist, und eine Anzahl von Leitungen (16), die jeweils an eine zugehörige Auslauföffnung (14) angeschlossen sind und die mit dem Luftstrom beförderte Feststoffe jeweils zu einer der Leitung (16) zugeordneten Ausgabeeinheit leiten, wobei an den Auslauföffnungen (14), den Leitungen (16) und/oder den Ausgabeeinheiten Drosselelemente (30) angeordnet sind, durch die der Staudruck in der betreffenden Leitung (16) erhöht wird,
**dadurch gekennzeichnet, dass** als Drosselelement (30) ein in einen freien Querschnitt einer Leitung geschobenes Reduzierstück verwendet wird, um dadurch den Staudruck zu erhöhen.

2. Landwirtschaftliche Maschine (2) nach Anspruch 1, **dadurch gekennzeichnet, dass** als Drosselelement (30) eine Lochblende verwendet ist.

3. Landwirtschaftliche Maschine (2) nach einem der vorhergehenden Ansprüche, **dadurch gekennzeichnet, dass** der Staudruck aller Leitungen (16) der landwirtschaftlichen Maschine (2) mittels der Drosselelemente (30) zumindest annähernd gleich eingestellt ist.

4. Landwirtschaftliche Maschine (2) nach einem der vorhergehenden Ansprüche, **dadurch gekennzeichnet, dass** die Drosselelemente (30) beweglich und/oder volumetrisch veränderlich ausgestaltet sind und deren räumliche Lage und/oder Volumenform manuell und/oder motorisch verstellbar ist.

5. Landwirtschaftliche Maschine (2) nach Anspruch 4, **dadurch gekennzeichnet, dass** an den Auslauföffnungen (14), den Leitungen (16) und/oder den Ausgabeeinheiten an eine Auswerteelektronik angeschlossene Sensoren angeordnet sind, mit denen die in einer einzelnen Leitung (16) beförderte Menge von körnigen Feststoffen ermittelt wird, die Auswerteelektronik die ermittelten Mengenwerte der einzelnen Leitungen (16) vergleicht und Mengenunterschiede anzeigt und/oder Stellsignale an eine Aktorik ausgibt, mit denen die Drosselelemente (30) beweglich und/oder volumetrisch veränderlich sind.

6. Landwirtschaftliche Maschine nach einem der vorhergehenden Ansprüche, **dadurch gekennzeichnet, dass** ein Drosselelement (30) in einem Bereich angeordnet ist, in dem sich eine Leitung (16) verzweigt.

7. Landwirtschaftliche Maschine nach Anspruch 6, **dadurch gekennzeichnet, dass** die Verzweigung der Leitung (16) über eine Y-Weiche (40) erfolgt, in die ein Drosselelement (30) integriert ist, und die verzweigten Enden einer Leitung (16) in Doppelscheibenscharen (54) eines Doppelreihen-Säaggregats (52) münden.

8. Landwirtschaftliche Maschine (2) nach einem der vorhergehenden Ansprüche, **dadurch gekennzeichnet, dass** die Verteilkammer (12) eine kreisrunde Grundform aufweist.

9. Landwirtschaftliche Maschine (2) nach einem der vorhergehenden Ansprüche, **dadurch gekennzeichnet, dass** Leitungen (16), die an Auslauföffnungen (14) angeschlossen sind, deren zugehörige Sektorengröße größer ist als die Sektorengröße anderer Auslauföffnungen (14), im Anschlussbereich an die Auslauföffnung (14) einen höheren Staudruck aufweisen als Leitungen (16), die an Auslauföffnungen (14) angeschlossen sind, deren zugehörige Sektorengröße kleiner ist als die Sektorengröße anderer Auslauföffnungen (14), wobei sich die jeweiligen Anteile der Auslauföffnungen (14) an der Summe der in der Verteilkammer (12) ausgebildeten Sektoren aus unterschiedlichen Kreisbogenanteilen ergeben, die auf die jeweiligen Auslauföffnungen (14) entfallen, und/oder aus unterschiedlich großen Querschnittsflächen der Auslauföffnungen (14) in der Verteilkammer (12).

10. Landwirtschaftliche Maschine (2) nach einem der vorhergehenden Ansprüche, **dadurch gekennzeichnet, dass** die Verbindungsleitung (8) im Mündungsbereich in die Verteilkammer (12) eine zumindest annähernd vertikale Ausrichtung aufweist, so dass sie die körnigen Feststoffe aus einer zumindest annähernd vertikalen Richtung in die Verteilkammer (12) einleitet, die Verbindungsleitung (8) zumindest annähernd mittig in der Verteilkammer (12) einmündet, so dass die körnigen Feststoffe mittig in die Verteilkammer (12) eingefördert werden, und in der Verteilkammer (12) Leitflächen ausgebildet sind, mit denen die Feststoffe aus der zumindest annähernd vertikalen Richtung in eine zumindest annähernd horizontale und radiale Richtung auf die Auslauföffnungen (14) zu umgeleitet werden.

11. Landwirtschaftliche Maschine (2) nach einem der vorhergehenden Ansprüche, **dadurch gekennzeichnet, dass** die Verteilkammer (12) zwischen 3 und 48 Auslauföffnungen (14) aufweist.

12. Landwirtschaftliche Maschine (2) nach einem der vorhergehenden Ansprüche, **dadurch gekennzeichnet, dass** die Verteilkammer (12) über die Bauhöhe der Auslauföffnungen (14) durch zwei ringförmige Formkörper umfangseitig begrenzt ist, die durch eine zumindest annähernd horizontal verlaufende Trennlinie voneinander getrennt sind, und beide Formkörper zueinander passende Ausnehmungen aufweisen, die paarweise jeweils eine Auslauföffnung (14) ausbilden.

13. Landwirtschaftliche Maschine (2) nach einem der vorhergehenden Ansprüche, **dadurch gekennzeichnet, dass** die Auslauföffnungen (14) auf der nach außen weisenden Seite der Außenwandung durch eine identifizierende Markierung gekennzeichnet sind.

14. Landwirtschaftliche Maschine (2) nach einem der vorhergehenden Ansprüche, **dadurch gekennzeichnet, dass** zwischen benachbarten Auslauföffnungen (14) bewegliche Trennstege angeordnet sind, deren räumliche Lage manuell und/oder motorisch verstellbar ist.

15. Landwirtschaftliche Maschine (2) nach Anspruch 14, **dadurch gekennzeichnet, dass** an den Auslauföffnungen (14), den Leitungen (16) und/oder den Ausgabeeinheiten an eine Auswerteelektronik angeschlossene Sensoren angeordnet sind, mit denen die in einer einzelnen Leitung (16) beförderte Menge von körnigen Feststoffen ermittelt wird, die Auswerteelektronik die ermittelten Mengenwerte der einzelnen Leitungen (16) vergleicht und Mengenunterschiede anzeigt und/oder Stellsignale an eine Aktorik ausgibt, mit denen die Trennstege verstellbar sind.

**Claims**

1. An agricultural machine (2) for spreading grainy solids having a pneumatic conveying system for conveying the grainy solids from a storage tank (4) to a number of dispensing units, wherein the conveying system comprises a blower (6), a connecting line (8) from the tank (4) to a distribution device (10), which comprises a distribution chamber (12) with a number of openings (14) formed therein, and a number of lines (16) which are each connected to an associated outlet opening (14) and which each conduct solids conveyed with the airstream to an output unit assigned to the line (16), wherein on the outlet openings (14), the lines (16) and/or the output units throttling elements (30) are arranged, through which the dynamic pressure in the line (16) concerned is increased, **characterised in that** as throttling element (30) a reducing piece pushed into a free cross-section of a line is used in order to thereby increase the dynamic pressure.

2. The agricultural machine (2) according to Claim 1, **characterised in that** as throttling element (30) an orifice plate is used.

3. The agricultural machine (2) according to any one of the preceding claims, **characterised in that** the dynamic pressure of all lines (16) of the agricultural machine (2) is adjusted at least approximately identically by means of the throttling elements (30).

4. The agricultural machine (2) according to any one of the preceding claims, **characterised in that** the throttling elements (30) are configured so as to be moveable and/or volumetrically variable and their spatial position and/or volume form is manually and/or motor adjustable.

5. The agricultural machine (2) according to Claim 4, **characterised in that** on the outlet openings (14), the lines (16) and/or the output units sensors connected to an electronic evaluation system are arranged, with which the quantity of grainy solids conveyed in an individual line (16) is determined, **in that** the electronic evaluation system compares the determined quantities of the individual lines (16) and shows quantity differences and/or outputs adjusting signals to an actuating system, with which the throttling elements (30) are moveable and/or volumetrically variable.

6. The agricultural machine (2) according to any one of the preceding claims, **characterised in that** a throttling element (30) is arranged in a region in which a line (16) branches.

7. The agricultural machine (2) according to Claim 6, **characterised in that** the branching of the line (16) takes place via a Y-turnout (40), in which a throttling element (30) is integrated, and **in that** the branched ends of a line (16) lead into double-disc coulters (54) of a double-row seeding unit (52).

8. The agricultural machine (2) according to any one of the preceding claims, **characterised in that** the distribution chamber (12) has a circular basic shape.

9. The agricultural machine (2) according to any one of the preceding claims, **characterised in that** lines (16), which are connected to the outlet openings (14), whose associated sector size is greater than the sector size of other outlet openings (14), have a higher dynamic pressure in the connection region to the outlet opening (14) than lines (16) which are connected to outlet openings (14) whose associated sector size is smaller than the sector size of other outlets openings (14), wherein the respective proportions of the outlet openings (14) in the sum of the sectors formed in the distribution chamber (12) materialise from different circular arc proportions which are attributable to the respective outlet openings (14), and/or from different-size cross-sectional areas of the outlet openings (14) in the distribution chamber (12).

10. The agricultural machine (2) according to any one of the preceding claims, **characterised in that** the connecting line (8) in the mouth region into the distribution chamber (12) has an at least approximately vertical orientation, so that it conducts the grainy solids from an at least approximately vertical direction into the distribution chamber (12), **in that** the connecting line (8) opens at least approximately centrally into the distribution chamber (12) so that the grainy solids are conveyed centrally into the distribution chamber (12), and **in that** in the distribution chamber (12) guiding surfaces are formed with which the solids are diverted from the at least approximately vertical direction into an at least approximately horizontal and radial direction to the outlet openings (14).

11. The agricultural machine (2) according to any one of the preceding claims, **characterised in that** the distribution chamber (12) comprises between 3 and 48 outlet openings (14).

12. The agricultural machine (2) according to any one of the preceding claims, **characterised in that** the distribution chamber (12) is peripherally delimited by two annular shaped bodies over the construction height of the outlet openings (14), which are separated from one another by a separating line running at least approximately horizontally, and **in that** both shaped bodies comprise recesses matching one another, which in pairs each form an outlet opening (14).

13. The agricultural machine (2) according to any one of the preceding claims, **characterised in that** the outlet openings (14) on the side of the outer wall facing to the outside are marked by an identifying marking.

14. The agricultural machine (2) according to any one of the preceding claims, **characterised in that** between neighbouring outlet openings (14) moveable separating webs are arranged whose spatial position is manually and/or motor adjustable.

15. The agricultural machine (2) according to Claim 14, **characterised in that** on the outlet openings (14), the lines (16) and/or the output units sensors connected to an electronic evaluation system are arranged, with which the quantity of grainy solids conveyed in an individual line (16) is determined, **in that** the electronic evaluation system compares the determined quantities of the individual lines (16) and shows quantity differences and/or outputs adjusting signals to an actuating system with which the separating webs are adjustable.

## Revendications

1. Machine agricole (2) destinée à l'épandage de matières solides granuleuses, pourvue d'un système de convoyage pneumatique voué au convoyage des matières solides granuleuses à partir d'une cuve de stockage (4) vers un nombre d'unités distributrices, le système de convoyage comportant une soufflante (6), une conduite de raccordement (8) de la cuve (4) vers un dispositif répartiteur (10), qui comporte une chambre de répartition (12) avec un nombre d'orifices d'écoulement (14) conçu dans celle-ci et un nombre de conduites (16), dont chacune est raccordée sur un orifice d'écoulement (14) associé et qui dirigent les matières solides convoyées par le flux d'air vers chaque fois une unité distributrice associée à la conduite (16), sur les orifices d'écoulement (14), les conduites (16) et/ou les unités distributrices étant placés des éléments d'étranglement (30) par lesquels la pression dynamique dans la conduite (16) concernée est augmentée, **caractérisée en ce qu'**il est utilisé en tant qu'élément d'étranglement (30) une pièce réductrice poussée dans une section transversale libre d'une conduite, pour augmenter de ce fait la pression dynamique.

**2.** Machine agricole (2) selon la revendication 1, **caractérisée en ce qu'**il est utilisé en tant qu'élément d'étranglement (30) un obturateur perforé.

**3.** Machine agricole (2) selon l'une quelconque des revendications précédentes, **caractérisée en ce que** la pression dynamique de toutes les conduites (16) de la machine agricole (2) est réglée de manière au moins approximativement égale au moyen des éléments d'étranglement (30).

**4.** Machine agricole (2) selon l'une quelconque des revendications précédentes, **caractérisée en ce que** les éléments d'étranglement (30) sont conçus en étant mobiles et/ou à volumétrie variable et **en ce que** leur position dans l'espace et/ou leur forme volumétrique est ajustable manuellement et/ou par moteur.

**5.** Machine agricole (2) selon la revendication 4, **caractérisée en ce que** sur les orifices d'écoulement (14), les conduites (16) et/ou les unités distributrices sont placés des capteurs connectés sur une électronique d'évaluation, à l'aide desquels la quantité de matières solides granuleuses convoyée dans une conduite (16) individuelle est déterminée, l'électronique d'évaluation compare les quantités déterminées des conduites (16) individuelles et affiche des différences quantitatives et/ou délivre à l'attention d'actionneurs des signaux de réglage, à l'aide desquels les éléments d'étranglement (30) sont mobiles et/ou variables en volumétrie.

**6.** Machine agricole selon l'une quelconque des revendications précédentes, **caractérisée en ce qu'**un élément d'étranglement (30) est placé dans une zone dans laquelle une conduite (16) se ramifie.

**7.** Machine agricole selon la revendication 6, **caractérisée en ce que** la ramification de la conduite (16) s'effectue via un aiguillage en Y (40) dans lequel est intégré un élément d'étranglement (30) et **en ce que** les extrémités ramifiées d'une conduite (16) débouchent dans des socs à doubles disques (54) d'un agrégat semeur à doubles disques (52).

**8.** Machine agricole (2) selon l'une quelconque des revendications précédentes, **caractérisée en ce que** la chambre de répartition (12) présente une forme de base circulaire.

**9.** Machine agricole (2) selon l'une quelconque des revendications précédentes, **caractérisée en ce que** des conduites (16) qui sont raccordées sur des orifices d'écoulement (14) dont la taille de secteur correspondante est supérieure à la taille de secteur d'autres orifices d'écoulement (14), présentent sur la zone de raccordement sur l'orifice d'écoulement (14) une pression dynamique plus élevée que celle des conduites (16) qui sont raccordées sur des orifices d'écoulement (14) dont la taille de secteur correspondante est inférieure à la taille de secteur d'autres orifices d'écoulement (14), les parts respectives des orifices d'écoulement (14) à la somme des secteurs conçus dans la chambre de répartition (12) résultant de différentes parts d'arc de cercle qui sont assignées aux orifices d'écoulement (14) respectifs, et/ou de surfaces de sections transversales de différentes dimensions des orifices d'écoulement (14) dans la chambre de répartition (12).

**10.** Machine agricole (2) selon l'une quelconque des revendications précédentes, **caractérisée en ce que** dans la zone d'embouchure dans la chambre de répartition (12), la conduite de raccordement (8) présente une orientation au moins approximativement verticale, de sorte à introduire les matières solides granuleuses à partir d'une direction au moins approximativement verticale dans la chambre de répartition (12), la conduite de raccordement (8) débouche au moins approximativement au centre dans la chambre de répartition (12), de sorte que les matières solides granuleuses soient convoyées au centre dans la chambre de répartition (12), et dans la chambre de répartition (12) sont conçues des surfaces déflectrices, à l'aide desquelles les matières solides sont redirigées à partir de la direction au moins approximativement verticale dans une direction au moins approximativement horizontale et radiale vers les orifices d'écoulement (14).

**11.** Machine agricole (2) selon l'une quelconque des revendications précédentes, **caractérisée en ce que** la chambre de répartition (12) comporte entre 3 et 48 orifices d'écoulement (14).

**12.** Machine agricole (2) selon l'une quelconque des revendications précédentes, **caractérisée en ce que** la chambre de répartition (12) est délimitée sur sa périphérie au-delà de la hauteur de construction des orifices d'écoulement (14) par deux corps moulés de forme annulaire, qui sont séparés l'un de l'autre par une ligne de séparation s'écoulant au moins approximativement à l'horizontale, et les deux corps moulés comportent des évidements mutuellement adaptés qui forment par paire chaque fois un orifice d'écoulement (14).

13. Machine agricole (2) selon l'une quelconque des revendications précédentes, **caractérisée en ce que** sur le côté dirigé vers l'extérieur de la paroi extérieure, les orifices d'écoulement (14) sont **caractérisés par** un marquage d'identification.

14. Machine agricole (2) selon l'une quelconque des revendications précédentes, **caractérisée en ce qu'**entre des orifices d'écoulement (14) voisins sont placés des listels séparateurs mobiles, dont la position dans l'espace est ajustable manuellement ou par moteur.

15. Machine agricole (2) selon la revendication 14, **caractérisée en ce que** sur les orifices d'écoulement (14), les conduites (16) et/ou les unités distributrices sont placés des capteurs connectés sur une électronique d'évaluation, à l'aide desquels la quantité de matières solides granuleuses convoyée dans une conduite (16) individuelle est déterminée, l'électronique d'évaluation compare les quantités déterminées des conduites (16) individuelles et affiche des différences quantitatives et/ou délivre à l'attention d'actionneurs des signaux de réglage, à l'aide desquels les listels séparateurs sont ajustables.

Fig. 1

Fig. 2

Fig. 3

Fig. 4

40

30

d$_r$

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19542057 A1
- DD 157290
- EP 1135980 A1
- EP 2959762 A1
- US 2017118906 A1
- DE 8617580 U1